Europäisches Patentamt

European Patent Office

Office européen des brevets

(11) Publication number: **0 323 274**
**A2**

## EUROPEAN PATENT APPLICATION

(21) Application number: **88312444.8**

(51) Int. Cl.⁴: **H 04 N 11/02**

(22) Date of filing: **30.12.88**

(30) Priority: 30.12.87 GB 8730308
22.06.88 GB 8814822
28.07.88 GB 8817979

(43) Date of publication of application:
05.07.89 Bulletin 89/27

(84) Designated Contracting States:
AT BE CH DE ES FR GR IT LI LU NL SE

(71) Applicant: **BRITISH BROADCASTING CORPORATION**
**Broadcasting House**
**London W1A 1AA (GB)**

(72) Inventor: **Thomas,Graham**
**BBC Research Dep. Kingswood Warren**
**Brighton Road,Tadworth Suurey K206NP (GB)**

**Storey,Richard**
**BBC Research Deprt. Kingswood Warren**
**Brighton Road, Tadworth (GB)**

(74) Representative: **Abnett, Richard Charles et al**
**REDDIE & GROSE 16 Theobalds Road**
**London WC1X 8PL (GB)**

(54) Bandwidth reduction for the transmission of television signals.

(57) A colour television signal is transmitted with bandwith reduction. A luminance encoder (10) has two paths with different sub-samplers (14) introducing different bandwidth reduction methods. The sub-sampled signal is restored in filters (16) similar to those (34) at the receiver and the path which introduces least error is used for transmission. The selected path is determined on a block-by-block basis and an indication of the paths used for each block digitally transmitted (26) in DATV format. Bandwidth reduction is also applied by encoders (42) to the U and V colour component signals. Several options exist using one or more coding paths and making the choice of coding path the same as for the luminance component, the same for the two colour components, or different for all three, or some other function.

EP 0 323 274 A2

FIG.3.

**Description**

## BANDWIDTH REDUCTION FOR THE TRANSMISSION OF TELEVISION SIGNALS

This invention relates to apparatus for transmitting a colour television signal, comprising means for bandwidth reducing the luminance component of an input television signal selectively on a block-by-block basis by one of two or more possible bandwidth reduction methods, and means for digitally transmitting with the signal an indication of which method of bandwidth reduction is applied to each block of the luminance component signal. The invention also relates to a receiver for use therewith.

References.

1. International Patent Application Publication No. WO87/04034.

2. International Patent Application Publication No. WO87/05770.

3. British Patent Application No. 88 14822.6 filed 22nd June 1988.

4. British Patent Application No. 88 17979.1 filed 28th July 1988.

5. LUCAS, K. and WINDRAM, M. "Standards for Broadcasting Satellite Services" IBA Technical Review No. 18, 1982, pages 12-27.

6. British Patent Specification 2,194,409A.

7. STOREY, R. 1986 "Motion Adaptive Bandwidth Reduction Using DATV". BBC Research Dept. Report No. 1986/5.

8. THOMAS, G.A. 1987. "Television Motion Measurement for DATV and Other Applications". BBC Research Dept. Report 1987/11.

The published references above should be reviewed to give the necessary background for the present specification.

References 1 to 4 describe methods for bandwidth reduction of the luminance components of a television signal. The image is divided into moving and stationary areas and different bandwidth reduction methods applied accordingly. Stationary areas are transmitted at a relatively high resolution and moving areas at a lower resolution. The methods of references 1-3 achieve a bandwidth reduction of four whereas the method of reference 4 achieves a reduction of two.

In the majority of television transmission systems the source colour components are filtered to reduce their horizontal bandwidth to approximately one-half that of the luminance signal. Both components are normally present on every television line; they are thus over-sampled vertically. Some transmission systems, such as MAC (reference 5), exploit this over-sampling by filtering and sub-sampling vertically by a factor of two. The two colour components can thus be transmitted on alternate lines, giving a reduction in transmission bandwidth.

Each of these colour components, when represented in digital form, contains one quarter of the number of samples required for luminance, and we have appreciated that they can therefore be applied to the systems described in references 1-4 as if they were luminance signals of one quarter size. Their bandwidth would thus be reduced by a further factor of four and the additional bandwidth required to transmit them would be 50% of that for luminance alone.

The method of bandwidth reduction described in references 1-3 uses four television fields to transmit a full set of image samples. A small section of a typical four field sampling structure, in the horizontal-vertical plane of the image, is illustrated in Figure 1A. The crosses and squares together comprise the samples of the original scene but only the sampling sites marked by a cross are used for transmission. The numbers above the crosses indicate which samples are transmitted in each of the component fields of the four-field sequence.

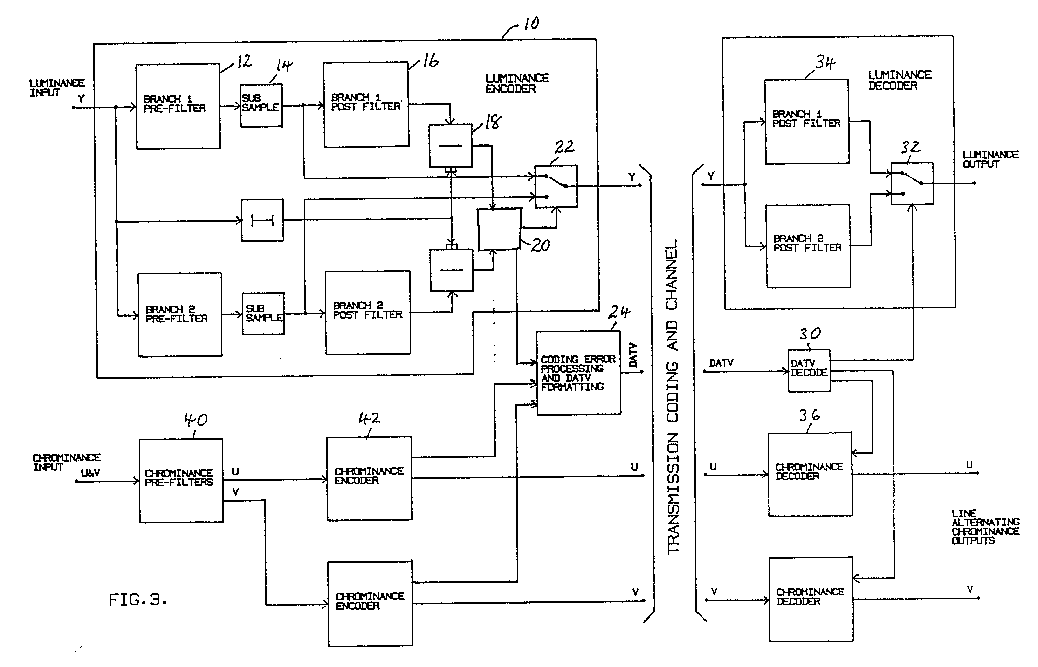

Reference 4 on the other hand uses only two fields to transmit a full set of image samples. An example of a typical two field sampling structure is shown in Figure 2A. All other things being equal, this method achieves half the degree of bandwidth reduction attainable using the method of references 1-3.

The essence of these methods is to apply two or more pre-filters to the input signal, each of which produces a reduced signal content which can, in turn, be fully supported by some combination of the transmitted samples. In this way vertical detail, horizontal detail and motion portrayal can be played off against one another to achieve the best instantaneous compromise for each picture area. Each pre-filter therefore, provides a separate and different signal path to the decoder.

The transmission of highly detailed areas requires a dense sampling structure, so samples from all four fields must be accumulated before these areas can be decoded. This implies that motion compensation must be used if the highest resolution is to be achieved for image areas other than those that are stationary or very nearly so.

Those moving areas that can not be transmitted using a high resolution path must be heavily filtered in the horizontal and vertical directions such that they can be transmitted using samples from a single field. A separate motion phase can thus be transmitted during each field, giving a safe fallback path which, although it has a lower resolution, is free of motion impairment.

The invention in its various aspects is defined in the appended claims to which reference should now be made.

The invention will be described by way of example with reference to the drawings, in which:-

Figures 1A and 1B (referred to above) show luminance sampling patterns for 4:1 and 2:1 bandwidth reduction, as indicated on the Figures;

Figures 2A and 2B show corresponding patterns for chrominance signals both giving 4:1 bandwidth reduction, in accordance with this invention;

Figure 3 is a block circuit diagram of a combined luminance and chrominance bandwidth reduction transmitter and a corresponding receiver; and

Figure 4 is a more detailed block diagram of the colour component decoding circuits in a receiver.

The following text assumes for simplicity an encoder having only two paths, although there is in principle no limit to the number of paths.

A block diagram of a bandwidth reduction encoder as decoder is shown in Figure 3. The luminance encoder 10 has two branches, each of which has its own pre-filter 12 and sub-sampler 14. Post-filters 16 are connected to the outputs of the subsamplers to restore the two subsampled signals to the source sampling structure. This is done in order to determine, before transmission, which of the paths performs best. The decision is taken by measuring the coding errors by use of subtractors 18 which subtract the input signal from each of the restored signals. A circuit 20 determines which path gives the smallest error and controls a selector switch 22 accordingly.

The decision is taken on a block by block basis and signalled to the decoder at the receiver by digital assistance (DATV) data formatted in a circuit 24 and transmitted over a DATV data channel. The received DATV data is decoded in a decoder 30 and controls by a selector switch 32 the selection of the appropriate output from a set of post filters 34 which perform a similar or identical function to those used in the encoder.

The chrominance signals U and V are received at the transmitter and applied to chrominance pre-filter circuitry 40. This circuitry splits the signal into its separate U and V components which are applied to respective encoders 42. These encoders are also connected to the DATV formatting circuit 24. At the receiver corresponding chrominance decoders 36 decode the U and V signals in accordance with DATV data decoded by the decoder 30.

Bandwidth reduction of the type indicated in references 1-4, or any similar bandwidth reduction technique, can be applied to the two colour components U and V of the television signal. The source colour components are filtered horizontally, and vertically, as in a typical component transmission system (reference 5). This filtering reduces the horizontal and vertical bandwidths of each component to the extent that they need only be sampled half as often horizontally and vertically as the corresponding luminance signal. Each colour component can thus be considered as a signal identical in form to the luminance signal, but with a quarter of the number of samples. The relationship between samples transmitted on each field is maintained but their separations in the horizontal and vertical directions are doubled. Two bandwidth reducers, identical to those used for luminance but operating at one quarter of the information rate, can be used to transmit the colour components.

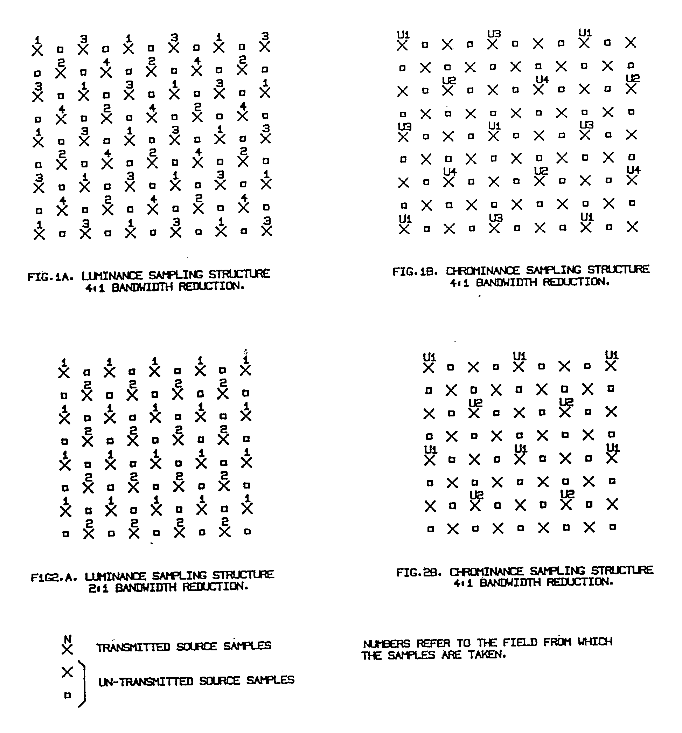

Typical sampling structures for the U component samples in four fields and two fields bandwidth reduction systems are shown in Figures 1B and 2B respectively. Note that in each case, a corresponding set of V samples can be accommodated by using the same sampling structure as for the U samples, but shifted down by two source samples, giving line alternating chrominance components within each field.

The methods by which the three components Y, U and V can be coded for transmission are numerous, reference 6 for instance describes a method by which a 1250 line bandwidth reduced signal can be packaged to allow compatible transmission through a 625 line MAC channel and reference 4 describes a method by which a higher resolution can be achieved within the constraints of a conventional PAL coded signal.

### DATV formatting.

The luminance and chrominance parts of the combined encoder will each produce their own digital assistance data. Five methods of treatment are considered below.

### Option 1.

Non-adaptive chrominance processing with the colour encoders using only one coding path.

The received image has halved vertical and horizontal chrominance bandwidths in all areas compared to the bandwidth reduced input signal. The permanent selection of the lowest resolution path causes a loss in potential resolution in those areas that would, in an adaptive system, be transmitted by a higher resolution path, but causes fewer motion impairments. This option is instrumentally simple since it requires no motion decisions for chrominance, no additional DATV capacity and only one set of pre and post filters.

### Option 2.

Adaptive processing using two or more of the coding path types used for the luminance signal, but using the control information derived within the luminance section of the encoder to control the selection of subsampled U and V signals for transmission.

The received chrominance generally has one half the horizontal and vertical bandwidth of the received luminance. The relative chrominance resolution therefore matches that of conventional MAC. Set against this is the possibility of an inappropriate choice of coding path surrounding those chrominance transitions which are not accompanied by a luminance transition. The frequency of such transitions is unknown. This option is more complex instrumentally than option 1, but does not require additional decision circuitry or digital assistance capacity.

### Option 3.

Adaptive processing using two or more of the coding path types used for luminance but with a single coding decision based on a function of the luminance and chrominance coding errors of each path.

The Y, U and V coding errors are combined arithmetically before taking the coding decision. The instrumental complexity and performance of this option are broadly similar to that of option 2 but it requires additional colour coding error measurement circuitry. The DATV capacity is the same as for option 2.

Option 4.

Adaptive processing using two or more of the coding path types used for luminance, but having separate coding decisions for luminance, U and V components and separate transmission of digital assistance.

This option has a performance broadly similar to that of options 2 and 3 but may, by taking more appropriate coding decisions, offer an improvement for chrominance transitions not accompanied by luminance transitions. It is more complex than option 2 since it requires additional decision circuitry to select the correct chrominance coding path. The results of the two chrominance coding decisions can be combined to reduce the additional DATV requirement to 25% of the luminance capacity.

Option 5.

Adaptive processing using two or more of the coding path types used for luminance with separate coding decisions for luminance, U and V components, but logically combining the three decisions before branch selection, to allow transmission with the same digital assistance capacity as for luminance alone.

This option has a similar performance to option 3 but may suffer from an occasional loss of potential luminance resolution near chrominance transitions. Its instrumental complexity is practically the same as for option 4.

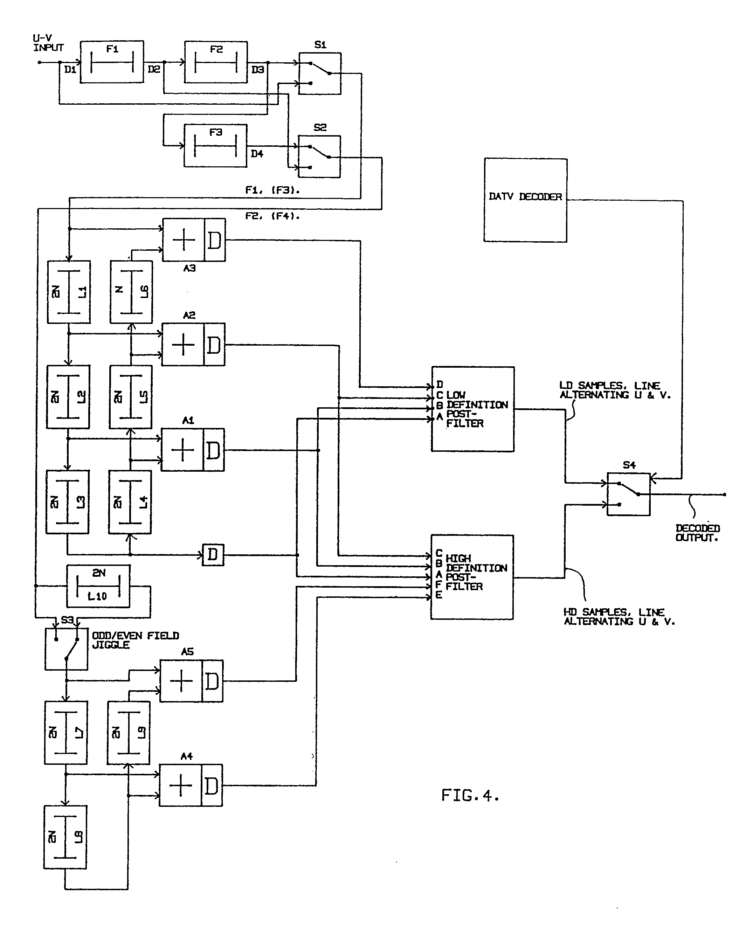

Figure 4 shows a preferred embodiment of the decoder for both the four and the two field bandwidth reduction cases. The incoming colour components are assumed to be in line-alternating form after channel decoding. This line alternation is exploited to allow the use of only a single set of decoder post-filters to produce both decoded colour components. A cascade of three field delays F1 to F3 gives access to the previous four transmitted fields. The two field case needs only a single field store F1.

For the four field case, switch S1 feeds samples of U1 and U3, received during fields F1 and F3, alternately into delays L1 to L6 and S2 feeds samples of U2 and U4, received during fields F2 and F4, alternately into delays L7 to L9. During the alternate (odd) lines, when no U samples are available, the process can be duplicated for the V samples.

The delays L1 to L9, excluding L6, each hold two line's worth of received samples (e.g. one line of alternating U1 and U3 samples followed by one line of alternating V1 and V3 samples). A vertical array of ten U samples appears at their outputs during "even" lines and an array of ten V samples during "odd" lines. The delay L6 holds only one line's worth of received samples but operates at half the rate, so its output is the eleventh U1 sample on even lines and the eleventh V1 sample on odd lines. The high definition post-filter therefore has the colour component samples transmitted during all four fields available as required. The low definition post-filter, on the other hand, has only the colour components transmitted during the most recent field, which is all that it requires.

The output of the appropriate post-filter is selected by the decoded DATV signal. The output signal is line alternating, and, if the image is to be displayed on a conventional vacuum tube (CRT) display, needs to be interpolated to give both colour components on all output lines.

The post-filters generally have vertical coefficient symmetry. Summing samples on each side of the phase centre of their vertical aperture, i.e. the output of L3, allows two (identical) coefficients to be implemented using a single multiplier, giving a further saving in hardware complexity.

The odd/even field joggle facility provided by switch S3 with its associated delay L10 is required to give the correct alignment of samples from odd and even fields when the source sampling structure has an even number of lines.

## Claims

1. Apparatus for transmitting a colour television signal, comprising means for bandwidth reducing the luminance component of an input television signal selectively on a block-by-block basis by one of two or more possible bandwidth reduction methods, and means for digitally transmitting with the signal an indication of which method of bandwidth reduction is applied to each block of the luminance component signal, characterised by means for bandwidth reduction of the associated colour component signals.

2. Apparatus according to claim 1, in which the means for bandwidth reduction of the colour component signals provides not more than one coding path for each colour component.

3. Apparatus according to claim 1, in which the means for bandwidth reduction of the colour component signals comprises more than one coding path.

4. Apparatus according to claim 3, in which the chrominance decisions for the luminance component are also used to control the choice of path for the chrominance component.

5. Apparatus according to claim 3, in which separate coding decisions are taken for each of the colour component signals.

6. Apparatus according to claim 5, in which the decisions taken for the two colour component signals are combined, so that the same choice of path is used for both colour component signals.

7. Apparatus according to claim 5, in which the decision taken for each of the two colour component signals is applied to the respective colour component signals.

8. Apparatus according to claim 6 or 7, in which an indication of the colour component coding path(s) employed is transmitted.

9. Apparatus according to claim 5, in which separate coding decisions are taken for each of the luminance and colour components and the decisions are logically combined, the combined decision being used to control the choice of coding path and an indication thereof being transmitted.

10. Apparatus according to claim 3, in which the coding decision for both luminance and colour components is taken as a function of the coding errors of the luminance and colour components respectively.

11. Apparatus according to any preceding claim, in which the coding decision is taken by applying the input component signal to two or more possible coding paths, restoring the coded signals, and comparing the restored signals with the input component signal to determine which coding path has introduced least errors.

12. Apparatus according to any preceding claim, in which the two colour component signals are transmitted in line alternation.

13. A receiver for receiving a colour television signal coded in accordance with any of the preceding claims, and comprising means for decoding the luminance component of a received signal selectively on a block-by-block basis by one of two or more possible bandwidth reduction methods, and means for separating from the received signal a digitally transmitted indication of which method of bandwidth reduction has been applied to each block of the luminance component signal and for controlling the decoding means accordingly, characterised by means for restoring bandwidth reduction of the associated colour component signals.

FIG.1A. LUMINANCE SAMPLING STRUCTURE
4:1 BANDWIDTH REDUCTION.

FIG.1B. CHROMINANCE SAMPLING STRUCTURE
4:1 BANDWIDTH REDUCTION.

FIG2.A. LUMINANCE SAMPLING STRUCTURE
2:1 BANDWIDTH REDUCTION.

FIG.2B. CHROMINANCE SAMPLING STRUCTURE
4:1 BANDWIDTH REDUCTION.

N
X    TRANSMITTED SOURCE SAMPLES

X ⎫
  ⎬  UN-TRANSMITTED SOURCE SAMPLES
□ ⎭

NUMBERS REFER TO THE FIELD FROM WHICH
THE SAMPLES ARE TAKEN.

FIG.3.

FIG.4.